(19) Europäisches Patentamt
European Patent Office
Office européen des brevets

(11) **EP 2 806 376 A1**

(12) **EUROPEAN PATENT APPLICATION**

(43) Date of publication:
**26.11.2014 Bulletin 2014/48**

(51) Int Cl.:
***G06K 9/62*** *(2006.01)*

(21) Application number: **13461532.7**

(22) Date of filing: **22.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Lingaro Sp. z o.o.**
**02-595 Warszawa (PL)**

(72) Inventors:
• **Romanowski, Zbigniew**
  **13-230 Lidzbark (PL)**
• **Stygar, Sebastian**
  **02-657 Warszawa (PL)**

(74) Representative: **Pawlowski, Adam**
**Eupatent.PL**
**ul. Zeligowskiego 3/5**
**90-752 Lodz (PL)**

(54) **Computer-implemented method for images comparison**

(57)    A computer-implemented method for images comparison, the method comprising the steps of: obtaining (101) a set of images (II), wherein the set of images (II) comprises at least two images ($\alpha_i$); obtaining (201) an image to be compared ($\beta$) with the set of images (II); creating (202) an auxiliary feature vector ($\Phi$) for each image based on the bag-of-feature methodology; imposing orthogonality conditions (203) on the auxiliary feature vectors ($\Phi$) of the images; enforcing the orthogonality conditions (204) by using a pseudo-inverse matrix (G) calculated to all auxiliary feature vectors ($\Phi$) by singular value decomposition; creating a final feature space by applying (205) the pseudo-inverse matrix (G) by creating a final feature vector ($\Gamma$) space based on the auxiliary feature vectors ($\Phi$) and the pseudo-inverse matrix (G); comparing (206) ($\Sigma$) the image to be compared with images in the final feature space ($\Gamma(\alpha_i)$, $\Gamma(\alpha_j)$).

201 — Obtain a set of source images and an image to compare

202 — Create a feature vector for each source image based on the bag-of-feature methodology

203 — Impose orthogonality conditions on the feature vectors of the source images

204 — Enforce the orthogonality conditions by using a pseudo-inverse matrix calculated by the singular value decomposition

205 — Create an improved feature space by applying the pseudo-inverse matrix

206 — Compare the image to be compared with source images in the new feature space

Fig. 2

## Description

TECHNICAL FIELD

The object of the present invention is a computer-implemented method for images comparison, in particular where an image is compared with a set of images that are considered dissimilar.

BACKGROUND ART

There are known, from the prior art, computer-implemented methods for images comparison.

A patent publication number US8275175B2 entitled "Automatic biometric identification based on face recognition and support vector machines", discloses a system and method where a biometric identification may be performed via an automated system capable of capturing a biometric sample or evidence from a user, extracting biometric data from the sample, comparing the biometric data with that contained in one or more reference templates, deciding how well they match, and indicating whether or not an authentication of identity or identification has been achieved.

US 2003/0103652 discloses a system and a method for performing face registration and authentication using face information. A set of readily distinguishable features for each user is selected at a registration step, and only the set of features selected at the registration step is used at a face authentication step, whereby memory use according to unnecessary information and amount of data calculation for face authentication can be reduced. Therefore, identity authentication through face authentication can be performed even under restricted environments of a USB token or smart card with limited resources, and authentication performance is improved, as readily distinguishable feature information is used, and the time for face authentication is reduced, as face authentication is performed using the SVM built by using the optimal set of readily distinguishable features at a training step.

Although the known methods achieve the respective effects of efficient images comparison within their selected domains, the present invention seeks an alternative method for images comparison - in particular a method that provides efficient comparison of an image with a set of images which are considered dissimilar in order to determine the level of similarity between the image and each of the images within the set.

SUMMARY OF THE INVENTION

The object of the invention is a computer-implemented method for images comparison, the method comprising the steps of: obtaining a set of images, wherein the set of images comprises at least two images; obtaining an image to be compared with the set of images; creating an auxiliary feature vector for each image based on the bag-of-feature methodology; imposing orthogonality conditions on the auxiliary feature vectors of the images; enforcing the orthogonality conditions by using a pseudo-inverse matrix calculated to all auxiliary feature vectors by singular value decomposition; creating a final feature space by applying the pseudo-inverse matrix by creating a final feature vector space based on the auxiliary feature vectors and the pseudo-inverse matrix; comparing the image to be compared with images in the final feature space.

Preferably, the set of images comprises at least two images and based on the properties of the cosines similarity measure, for each pair of images from the set of images, dot product of their feature vectors is close to zero.

Preferably, the auxiliary feature vectors are created based on the Local Binary Patterns (LBP) method and/or the method related to Gaussian pyramid whereas the auxiliary feature vector is a real vector of $M$ dimensional space associated with the image.

Preferably, there are more LBPs per image than there are images in the set of images.

Preferably, the step of creating of the final feature vector space based on the auxiliary feature vectors and the pseudo-inverse matrix is based on a pseudo-inverse matrix created by singular value decomposition.

Preferably, the comparison step is based on similarity that is defined by the cosine of an angle between two vectors.

Another object of the present invention is a computer program comprising program code means for performing all the steps of the computer-implemented method according to the invention when said program is run on a computer, as well as a computer readable medium storing computer-executable instructions performing all the steps of the computer-implemented method according to the invention when executed on a computer.

BRIEF DESCRIPTION OF DRAWINGS

These and other objects of the invention presented herein are accomplished by providing a computer-implemented method for images comparison, in particular where an image is compared with each image belonging to a set of images that, based on subjectively selected criteria, are considered dissimilar. Further details and features of the invention, its nature and various advantages will become more apparent from the following detailed description of the preferred embodiments shown in drawings, in which:

FIG. 1 presents a set of source exemplary images;
FIG. 2 shows a schematic diagram of a method according to the present invention; and
Fig. 3 depicts a more detailed embodiment of the present invention.

MODES FOR CARRYING OUT THE INVENTION

The present method is useful for comparison of an image with a set of images considered dissimilar. A set of dissimilar images is required by the method, and at the same time, the set represents a subjective characteristic of the dissimilarity. It means that by changing the set of dissimilar images, the functionality of the algorithm is changed as well. Thus, the method according to the present invention is able to incorporate personal perceptions and selection criteria for the set of images into a formal, mathematically strict algorithm. A sample application of the present method may be in comparison of an image representing a trademark with a set of registered trademarks, in order to assess whether the compared trademark is new and should be accepted by the trademark registration office.

In order to solve the problem, the present invention follows a content-based image retrieval methodology.

For any image a real vector is created. This vector is called a feature vector of the analyzed image. In a preferred embodiment of the present invention, the feature vector is a bag-of-visual words or bag-of-features (known for example from: Smeulders J., Geusebroek J.: Visual word ambiguity. IEEE Trans. Pattern Anal. Mach. Intell., 32, 1271-1283). There are many possible methods of generating visual words or features, for example a Local Binary Patterns method.

Then, similarity between two images is defined as the dot product of their normalized feature vectors. If the dot product of two given different feature vectors is close to 1, then two given images associated with these feature vectors are similar, otherwise the images are considered dissimilar. Similarity of the images is determined by a procedure generating feature vectors, and its applicability is domain-specific.

The method according to the present invention is based on the feature vectors and cosine similarity measure. Additionally an important feature of the present method is the introduction of the orthonormality condition for the images.

Overview of the method

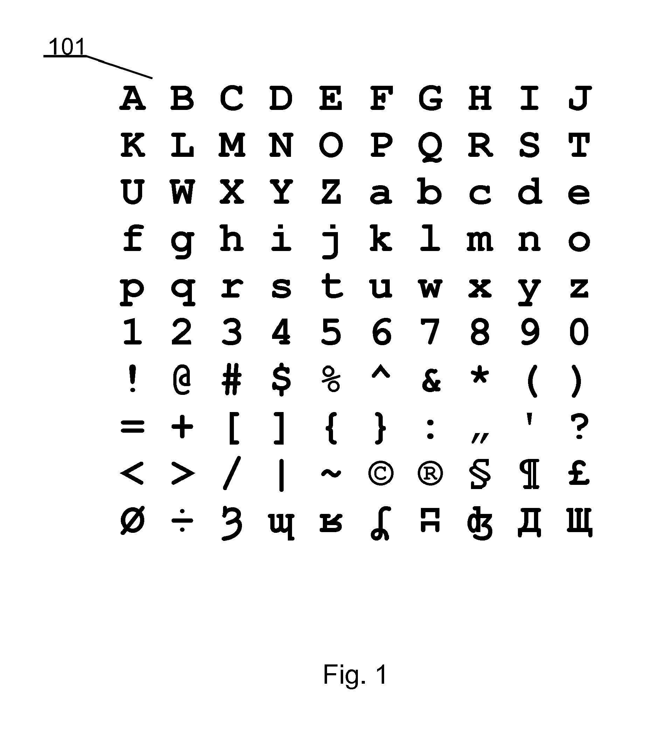

According to the preferred embodiment, the images of the set of images are considered dissimilar, for example as shown in Fig.1, which presents 100 images in a matrix of ten rows and 10 columns. All images presented in Fig. 1 are treated as dissimilar. An exemplary set of images that are considered dissimilar may be a set of trademarks, which have been previously registered by a manual examination process at the trademark office and in order for each trademark to get registered it had to be different than previously registered trademarks (apart from trademarks of the same owner or trademarks registered in different classes, which can be filtered out of the set).

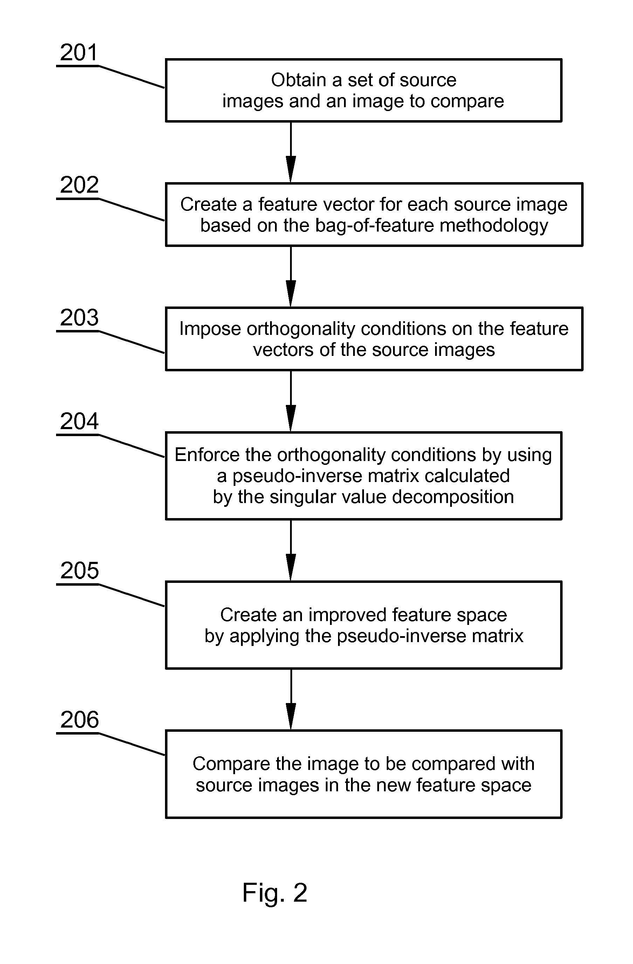

Images presented in Fig. 1 are input to the process shown in Fig. 2. At step 201 of the process, a set of images and an image to be compared with the set are obtained.

Based on the properties of the cosines similarity measure, for each pair of dissimilar images, their dot product should be close to zero. According to the invention, there exists a requirement that for two different images their dot product is equal to 0 and that feature vectors are normalized to 1.

Hence, it is required that the feature vectors of the images are orthonormal.

The feature vectors' generation starts at step 203, wherein for each image, it is executed in two following steps.

In the first step 202, a first kind of feature vectors is generated, namely the auxiliary feature vectors are created based preferably on the Local Binary Patterns (LBP) and the method related to Gaussian pyramid (Lindeberg T.: Scale-space theory: A basic tool for analyzing structures at different scales. Journal of Applied Statistics, 21, 225-270).

Preferably, there are more LBPs that there are images. One reason for this is that some of the LBPs may be statistically dependent on other LBPs (partly correlated). Further, additional LBPs give more guarantee of creation of a feature space in which vectors may be set perpendicularly to each other.

Then, the orthonormality condition is guaranteed by the process of generating the feature vectors 203. This arises from the fact that the source images are dissimilar.

In the next step 204, a pseudo-inverse matrix to all auxiliary feature vectors is constructed, where the pseudo-inverse matrix is created by singular value decomposition.

Then, the final feature vector space is created, comprising the second kind of feature vectors, namely final feature vectors, at step 205, based on the auxiliary feature vectors and the pseudo-inverse matrix. The last step 206 of the method shown in Fig. 2, is to compare the image to the images in the final feature vector space. The following description presents further details of the method steps 201 to 206.

Details of the method

Let the symbol I denote a set of images considered dissimilar. Since an image is a matrix of any size, the number of elements in the set I is infinite.

Let a non-empty set of images

$$\Pi = \{\alpha_i\}_{i=1}^{N} \subset I$$ be a finite subset of images, where

$\alpha_i$ is the $i$-th image, and $N$ is the number of images in the set $\Pi$.

Let an auxiliary feature vector (henceforth referred to also as AFV) be a real vector of *M* dimensional space associated with the image. The auxiliary feature vector is created by mapping: $\Phi : I \mapsto P^M$

The AFV is created directly on the image. It is assumed that for any image $\beta \in I$, the auxiliary feature vector $\Phi(\beta)$ created by operator $\Phi$ has the same dimension *M*.

Let the final feature vector (henceforth referred to also as FFV) be a real vector of *N* dimensional space associated with the image. The final feature vector is created by mapping: $\Gamma : I \mapsto P^N$, where operator $\Gamma$ is a product $\Gamma(\beta) = G\Phi(\beta)$, where $\mathbf{G} \in P^{N \times M}$ is a matrix.

The FFV is created as a matrix-vector product. The number of rows *N* of matrix **G** is equal to the number of elements of set $\Pi$, i.e. the number of images in the set.

The number of columns *M* of matrix **G** is equal to the number of dimensions of mapping $\Phi$.

The similarity measure between two images $\alpha$, $\beta \in I$ is based on the dot product of their final feature vectors. Let $\mathbf{a} = \Gamma(\alpha) \in P^N$ and $\mathbf{b} = \Gamma(\beta) \in P^N$.

The similarity $\Sigma : P^N \times P^N \mapsto P$ between two feature vectors $\mathbf{a}, \mathbf{b} \in P^N$ is defined as follows:

$$\Sigma(\mathbf{a}, \mathbf{b}) = \frac{\mathbf{a}^T \cdot \mathbf{b}}{|\mathbf{a}||\mathbf{b}|}$$

where

$$\mathbf{a}^T \cdot \mathbf{b} = \sum_{k=1}^{N} \mathbf{a}_k \mathbf{b}_k \qquad |\mathbf{x}|^2 = \sum_{k=1}^{N} \mathbf{x}_k^2$$

Since the similarity is the cosine of angle between two vectors, from the above definition it follows that for any two images the similarity holds - $1 \leq \Sigma(\mathbf{a}, \mathbf{b}) \leq 1$.

In conclusion, if $\Sigma(\alpha, \beta) \approx 1$, then the images $\alpha$, $\beta$ are similar, and if $\Sigma(\alpha, \beta) \approx 0$, then the images $\alpha$, $\beta$ are dissimilar.

Based on the above definitions, the problem can be formulated as follows: check if an image $\beta \in I$ is similar to any image in the set $\Pi$.

The present invention solves the problem of comparing the image $\beta$ with each image from the set $\Pi$, which means that the computational cost is proportional to the number of elements in the set. The main aspect of the present invention is a reliable and mathematically sound algorithm of comparing two images and calculating their similarity factor.

The similarity between images is defined by function $\Sigma$. The similarity function $\Sigma$ takes two arguments - two final feature vectors, which both depend on matrix **G** and mapping $\Phi$.

The preferred embodiment of the present invention uses auxiliary feature vectors, created by operator $\Phi$.

Operator $\Phi$ creates a real vector of dimension *M* for any image $\beta \in I$, hence $\Phi : I \mapsto P^M$. The restriction that operator $\Phi$ maps the image space to the real space is strong. If each dimension in the real space is treated as a feature describing an image, the constant multidimensional restriction means that each image must be described by a fixed set of features.

A similar situation exists in the English language, where the language consists of words. This analogy is used and the present invention describes the image as a set of features or as a set of visual words.

Based on the latent semantic analysis and latent semantic indexing concepts (known for example from: (1) Berry M.W., Drmac Z., Jessup E.R. : Matrices, vector spaces, and information retrieval. SIAM Review, 41, 335-362. or (2) Landauer T.K., Foltz P.W., Laham D. : An introduction to latent semantic analysis. Discourse Processes, 25, 259-284.), each image in the present invention is described by a frequency vector, i.e. each element of the vector holds a number of occurrences of a particular feature, a single visual word.

Local Binary Patters (optional)

There are many possible methods of generating visual words (known for example from (1) Zhang S., Tian Q., Hua G., Huang Q., Gao W.: Generating descriptive visual words and visual phrases for large scale image applications. IEEE Transactions on Image Processing, 20, 2664-2677. or (2) Smeulders J., Geusebroek J.: Visual word ambiguity. IEEE Trans. Pattern Anal. Mach. Intell., 32, 1271-1283) that are applicable in the image recognition and image comparison domain. In the preferred embodiment of the present invention a method based on Local Binary Patterns (LBP) is used to illustrate the method.

It should be stressed that the generation of the auxiliary feature vector and the generation of the final feature vector are two separate processes. The process of generating the AFV as well as the process of conjoining the AFV into the FFV can be changed freely.

The following section presents how the elements of the AFV are created.

The method of the present invention of creating the feature is based on an observation that people perceive neighboring pixels simultaneously. Based on this observation, images are analyzed as fragments consisting of $4 \times 4$ black-and-white pixels, i.e. 16 pixels are analyzed simultaneously. Hence, each fragment corresponds to one of the $2^{16} = 65536$ possible features.

Creation of features based on binary patterns corresponds to Local Binary Patterns - a method already used in image retrieval systems, face recognition and texture classification.

For large images the $4 \times 4$ pattern is only a tiny part of the image, so, in order to improve the process, the frequency vector with pattern $4 \times 4$ is created again for the same image scaled down by 50%. The scaling and pattern counting is continued until the scaled down image size is greater than 32 pixels.

Hence, the extended method preferably generates the sequence of frequency-vectors, each holding information specific to scale. In this context, the construction corresponds to a Gaussian pyramid, to a Laplacian Pyramid or to multi-resolution histograms.

The FFV of the image in the preferred embodiment of the present invention is the weighted sum of the frequency vectors for each scale, i.e. for scales $2^{-n}100\%$ where $n = 0,1,...$ is determined by the size of the image, and the weights are 2 for $n > 0$ and 1 for $n = 0$.

Having generated a feature vector, the following section describes the procedure of creating matrix **G** of $\Gamma$ operator.

Lets define the feature vector of any image $\alpha_i \in \Pi$ as $\mathbf{f}_i \in P^M$. Then a matrix $\mathbf{F} \in P^{M \times N}$ is created, where the $i$-th column contains the vector $f_i$.

Now, the fact that the images are considered dissimilar is used. Based on the definition of function $\Sigma$, two images are "most dissimilar" when the value returned by the function $\Sigma$ is equal to 0. It means that for $\alpha_i, \alpha_j \in \Pi$:

$$\Sigma(\Gamma(\alpha_i), \Gamma(\alpha_j)) = \begin{cases} 0 & i \neq j \\ 1 & i = j \end{cases}.$$

Since function $\Sigma$ is the normalized dot product, the above equation means that the final feature vectors $\Gamma(\alpha_i)$, $\Gamma(\alpha_j)$ for the images $\alpha_i$, $\alpha_j \in \Pi$ must be orthonormal.

Hence, the matrix **GF** must be an orthogonal matrix. It is known that the identity matrix is an orthogonal matrix as well. Based on this fact one may obtain the equation $\mathbf{GF} = \mathbf{I}$, where $\mathbf{I} \in \mathbf{P}^{N \times N}$.

It is also known from linear algebra that matrix **G** that fulfills the above condition is a pseudo-inverse matrix (Golub G.H, Loan C.F.: Matrix Computations, JHU Press.), hence:

$\mathbf{G} = \mathbf{F}^+$.

It has been proven that if matrix **F** is a full rank matrix and its singular value decomposition is $\mathbf{F} = \mathbf{V}\Sigma\mathbf{U}^T$ with $\Sigma = \text{diag}(\sigma_1, \sigma_2,...,\sigma_N)$, so $\mathbf{F}^+ = \mathbf{V}^T\Sigma^+\mathbf{U}$ where $\Sigma^+ = \text{diag}(1/\sigma_1, 1/\sigma_2,...,1/\sigma_N)$.

From the construction of the pseudo-inverse matrix, it follows that the constructed final feature vectors for images $\alpha_i \in \Pi$ are orthonormal as required.

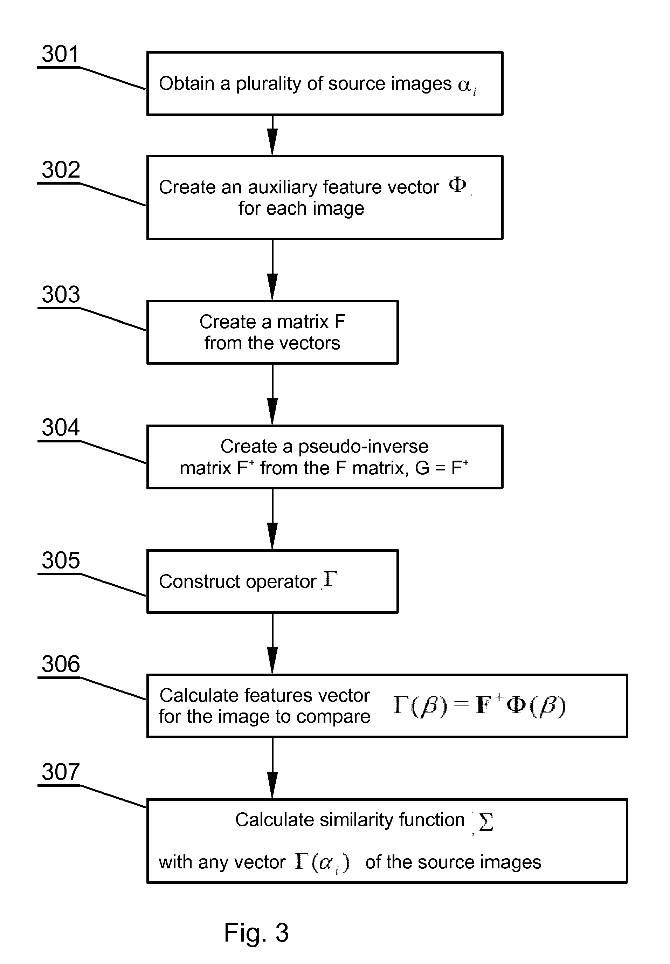

Fig. 3 provides a complete overview of the method described in details in the preceding paragraphs.

The process starts at step 301, where a set of images and an image to be compared with each image from the set are obtained.

Next, at step 302 an auxiliary feature vector for each image from the set of images is created.

Further, at step 303 of the present method, matrix **F** from the auxiliary feature vectors is created with a further step 304 of creating a pseudo-inverse matrix $\mathbf{F}^+$ from the **F** matrix, $\mathbf{G} = \mathbf{F}^+$.

The next step of the process 305, is to construct the $\Gamma$ operator followed by the step 306 where there is calculated a feature vector for the image to compare $\Gamma(\beta) = \mathbf{F}^+\Phi(\beta)$ with the set of images.

The final step 307 of the procedure is to calculate a similarity function with any vector $\Gamma(\alpha_i)$ of the images.

The method presented herein is based on an assumption that the images of a set are somehow dissimilar. Such assumption is needed to build a space, in which each features vector is perpendicular to other feature vectors.

The optional elements of the method are the method of creating of feature vectors - first the auxiliary feature vector (AFV) and then combining of AFV into the final feature vector (FFV). The logic and method of determining the image similarity operates independently from the method of features building.

It can be easily recognised, by one skilled in the art, that the aforementioned computer-implemented method for images comparison may be performed and/or controlled by one or more computer programs. Such computer programs are typically executed by utilizing the computing resources in a computing device such as personal computers, personal digital assistants, cellular telephones, receivers and decoders of digital television or the like. Applications are stored in non-volatile memory, for example a flash memory or volatile memory, for example RAM and are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer-implemented method for images comparison, the method comprising the steps of:

• obtaining (101) a set of images ($\Pi$), wherein the set of images ($\Pi$) comprises at least two images ($\alpha_i$);

• obtaining (201) an image to be compared ($\beta$) with the set of images ($\Pi$);

• creating (202) an auxiliary feature vector ($\Phi$) for each image based on the bag-of-feature methodology;

• imposing orthogonality conditions (203) on the auxiliary feature vectors ($\Phi$) of the images;

• enforcing the orthogonality conditions (204) by using a pseudo-inverse matrix (**G**) calculated to all auxiliary feature vectors ($\Phi$) by singular value decomposition;

• creating a final feature space by applying (205) the pseudo-inverse matrix (**G**) by creating a final feature vector ($\Gamma$) space based on the auxiliary feature vectors ($\Phi$) and the pseudo-inverse matrix (**G**);

• comparing (206) ($\Sigma$) the image to be compared with images in the final feature space ($\Gamma(\alpha_i)$, $\Gamma(\alpha_j)$).

2. A computer-implemented method for images comparison according to claim 1, **characterized in that** the set of images ($\Pi$) comprises at least two images ($\alpha_i$) and that based on the properties of the cosines similarity measure, for each pair of images from the set of images, dot product of their feature vectors is close to zero.

3. A computer-implemented method for images comparison according to claim 1, **characterized in that** the auxiliary feature vectors ($\Phi$) are created based on the Local Binary Patterns (LBP) method and/or the method related to Gaussian pyramid whereas the auxiliary feature vector ($\Phi$) is a real vector of $M$ dimensional space associated with the image.

4. A computer-implemented method for images comparison according to claim 1, **characterized in that** there are more LBPs per image than there are images in the set of images ($\Pi$).

5. A computer-implemented method for images comparison according to claim 1, **characterized in that** the step of creating of the final feature vector ($\Gamma$) space based on the auxiliary feature vectors ($\Phi$) and the pseudo-inverse matrix (**G**) is based on a pseudo-inverse matrix created by singular value decomposition (**F**).

6. A computer-implemented method for images comparison according to claim 1, **characterized in that** the comparison step is based on similarity that is defined by the cosine of an angle between two vectors.

7. A computer program comprising program code means for performing all the steps of the computer-implemented method according to any of claims 1-6 when said program is run on a computer.

8. A computer readable medium storing computer-executable instructions performing all the steps of the computer-implemented method according to any of claims 1-6 when executed on a computer.

101

A B C D E F G H I J
K L M N O P Q R S T
U W X Y Z a b c d e
f g h i j k l m n o
p q r s t u w x y z
1 2 3 4 5 6 7 8 9 0
! @ # $ % ^ & * ( )
= + [ ] { } : „ ' ?
< > / | ~ © ® § ¶ £
Ø ÷ Ʒ ц в ʃ п ђ д щ

Fig. 1

201 — Obtain a set of source images and an image to compare

202 — Create a feature vector for each source image based on the bag-of-feature methodology

203 — Impose orthogonality conditions on the feature vectors of the source images

204 — Enforce the orthogonality conditions by using a pseudo-inverse matrix calculated by the singular value decomposition

205 — Create an improved feature space by applying the pseudo-inverse matrix

206 — Compare the image to be compared with source images in the new feature space

Fig. 2

301 — Obtain a plurality of source images $\alpha_i$

302 — Create an auxiliary feature vector $\Phi$ for each image

303 — Create a matrix F from the vectors

304 — Create a pseudo-inverse matrix $F^+$ from the F matrix, $G = F^+$

305 — Construct operator $\Gamma$

306 — Calculate features vector for the image to compare $\Gamma(\beta) = \mathbf{F}^+ \Phi(\beta)$

307 — Calculate similarity function $\Sigma$

with any vector $\Gamma(\alpha_i)$ of the source images

Fig. 3

**EP 2 806 376 A1**

Europäisches Patentamt
European Patent Office
Office européen des brevets

## EUROPEAN SEARCH REPORT

Application Number

EP 13 46 1532

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUU-TUAN NGUYEN ET AL: "How far we can improve micro features based face recognition systems?", IMAGE PROCESSING THEORY, TOOLS AND APPLICATIONS (IPTA), 2012 3RD INTERNATIONAL CONFERENCE ON, IEEE, 15 October 2012 (2012-10-15), pages 350-353, XP032336944, DOI: 10.1109/IPTA.2012.6469533 ISBN: 978-1-4673-2585-1 * II. IMPROVEMENTS FOR MICRO FEATURES BASED FACE RECOGNITION SYSTEMS; page 351 - page 352 * | 1-8 | INV. G06K9/62 |
| A | ZHI LI ET AL: "Scale- and Rotation-Invariant Local Binary Pattern Using Scale-Adaptive Texton and Subuniform-Based Circular Shift", IEEE TRANSACTIONS ON IMAGE PROCESSING, IEEE SERVICE CENTER, PISCATAWAY, NJ, US, vol. 21, no. 4, 1 April 2012 (2012-04-01), pages 2130-2140, XP011436461, ISSN: 1057-7149, DOI: 10.1109/TIP.2011.2173697 * V. TEXTURE CLASSIFICATION USING THE SCALE AND ROTATION-INVARIANT LBP; page 2135 * | 3 | |
| A | VELTKAMP C ET TANASE M: "Content-Based Image Retrieval Systems: A Survey", TECHNICAL REPORT UU-CS-2000-34, XX, XX, no. UU-CS-2000-34, 1 October 2000 (2000-10-01), XP002222321, * 3.29 LCPD; page 23 - page 24 * | 1-8 | TECHNICAL FIELDS SEARCHED (IPC) G06K |

The present search report has been drawn up for all claims

| Place of search | Date of completion of the search | Examiner |
|---|---|---|
| The Hague | 15 October 2013 | Celik, Hasan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8275175 B2

- US 20030103652 A

### Non-patent literature cited in the description

- **SMEULDERS J. ; GEUSEBROEK J.** Visual word ambiguity. *IEEE Trans. Pattern Anal. Mach. Intell.,* vol. 32, 1271-1283
- **LINDEBERG T.** Scale-space theory: A basic tool for analyzing structures at different scales. *Journal of Applied Statistics,* vol. 21, 225-270
- **BERRY M.W. ; DRMAC Z. ; JESSUP E.R.** Matrices, vector spaces, and information retrieval. *SIAM Review,* vol. 41, 335-362
- **LANDAUER T.K. ; FOLTZ P.W. ; LAHAM D.** An introduction to latent semantic analysis. *Discourse Processes,* vol. 25, 259-284

- **ZHANG S. ; TIAN Q. ; HUA G. ; HUANG Q. ; GAO W.** Generating descriptive visual words and visual phrases for large scale image applications. *IEEE Transactions on Image Processing,* vol. 20, 2664-2677
- **SMEULDERS J. ; GEUSEBROEK J.** Visual word ambiguity. *IEEE Trans. Pattern Anal. Mach. Intell.,* vol. 32, 1271-1283
- **GOLUB G.H ; LOAN C.F.** Matrix Computations. JHU Press